# EUROPEAN PATENT APPLICATION

(11) **EP 3 806 573 A1**
(43) Date of publication of application: **14.04.2021**
(21) Application number: 19821657.4
(22) Date of filing: 11.06.2019
(51) Int. Cl.: H04W 76/10, H04M 1/00, H04W 4/00, H04W 8/00, H04W 84/10

(54) **INFORMATION PROCESSING DEVICE**

(30) Priority: 20.06.2018 JP 2018117367
(71) Applicant: Vivita Japan, Inc., Fukuoka 8120012 (JP)
(72) Inventor: SHIMADA, Shozaburo, Fukuoka-shi, Fukuoka 812-0012 (JP); KASHIMOTO, Kazutoshi, Fukuoka-shi, Fukuoka 812-0012 (JP); PILLAI, Siddharth Vijay, Fukuoka-shi, Fukuoka 812-0012 (JP); ITAMOTO, Shintaro, Fukuoka-shi, Fukuoka 812-0012 (JP); NII, Hideaki, Fukuoka-shi, Fukuoka 812-0012 (JP); IMAI, Masatoshi, Fukuoka-shi, Fukuoka 812-0012 (JP); KAGAMI, Shota, Fukuoka-shi, Fukuoka 812-0012 (JP)
(74) Representative: Herzog, Markus
(86) International application number: PCT/JP2019/023142
(87) International publication number: WO 2019/244722

(57) **Abstract**

The present invention enables determination of a pairing partner from among a plurality of devices. In response to acquisition of individual identification information enabling identification of one peripheral terminal 2, from among one or more peripheral terminals 2, a pairing unit 101 of a central terminal 1 starts a process (scanning) for acquiring an advertising packet, which is information transmitted from the one peripheral terminal 2 and which is necessary for pairing, and executes pairing with the peripheral terminal 2 by using the acquired advertising packet. In addition, a pairing unit 201 of the peripheral terminal 2 executes control for transmitting the advertising packet in response to acquisition of individual identification information by the central terminal 2.

## Description

### TECHNICAL FIELD

The present invention relates to an information processing apparatus.

### BACKGROUND ART

Conventionally, when information processing apparatuses are connected to each other without using wired cables, a short-range wireless communication technique such as infra-red communication or Bluetooth (registered trademark) is used. For example, when Bluetooth (registered trademark) devices are wirelessly connected and used, "pairing" is first required. In pairing, information (hereinafter, referred to as advertising packet) required for wireless connection of a Bluetooth (registered trademark) device is registered in a Bluetooth (registered trademark) device to be the partner of the wireless connection. This allows a Bluetooth (registered trademark) device to be recognized.

In the field of such short-range wireless communication technologies, accompanying the spread of IoT (Internet of Things) in recent years, studies and developments to reduce power consumption have been promoted. For example, a wireless communication technique of ultra-low power consumption such as BLE (Bluetooth (registered trademark) Low Energy) has also been developed in which, although the communication range is short and the communication speed is low, the operation is possible for several years without battery replacement. For example, Patent Document 1 discloses a technique of an information processing apparatus that includes a unique identifier (IDm) in an advertising packet and performs broadcast communication by BLE. Furthermore, Patent Document 2 discloses a technique of a communication apparatus for controlling BLE based on an event.

Patent Document 1: Japanese Unexamined Patent Application, Publication No. 2018-23072
Patent Document 2: Japanese Unexamined Patent Application, Publication No. 2017-208617

### DISCLOSURE OF THE INVENTION

### Problems to be Solved by the Invention

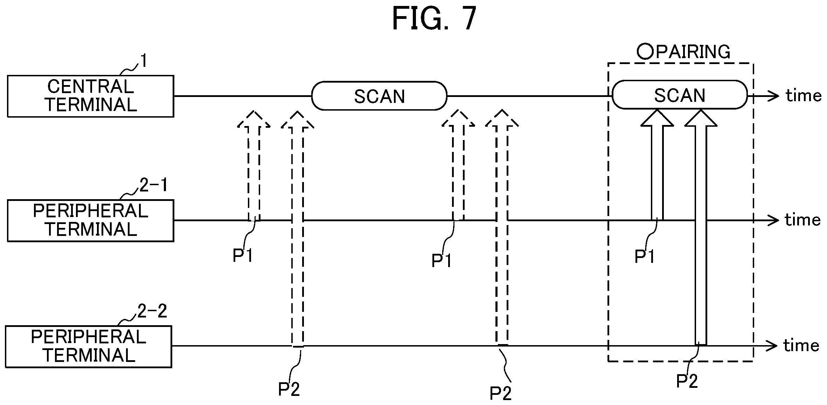

However, in the case of the conventional technique, when there is a plurality of devices (hereinafter referred to as "BLE devices") to be wireless connection partners by BLE, the following problem occurs. That is, in the case of the conventional technique, as shown in FIG. 7, for example, when there are BLE devices B and C to be connected to the BLE device A, each of the BLE devices B and C transmits an advertising packet (a white arrow in FIG. 7) at regular intervals. On the other hand, the BLE device A performs scanning at regular intervals to acquire the advertising packet transmitted. Here, in a case in which the timing of transmission of the advertising packet of each of the BLE devices B and C overlaps with the timing of scanning of the BLE device A, the BLE device A detects the BLE devices B and C, so that pairing with the BLE device B or C becomes possible. More specifically, as a result of scanning by the BLE device A, information relating to each of the BLE devices B and C is displayed on the screen of the BLE device A. Then, when the user operating the BLE device A selects one of the BLE devices (B or C) to be paired with the BLE device A, pairing is performed between the selected BLE device (B or C) and the BLE device A.

However, in a case in which the BLE devices displayed as the candidate connection destinations on the screen of the BLE device are the same type, it is difficult to identify them. For example, when the BLE device B and the BLE device C shown in FIG. 7 are the same type, it is difficult to determine which BLE device each of the information on the two BLE devices displayed on the screen of the BLE device A indicates.

The present invention has been made in view of such a situation, and has an object of making it possible to distinguish a pairing partner among a plurality of apparatuses. Means for Solving the Problems

In order to achieve the above object, an information processing apparatus according to an aspect of the present invention is an information processing apparatus performing information communication for one or more other information processing apparatuses, each performing a predetermined function, and the information processing apparatus includes a pairing unit configured to start, using acquisition of information as specifying information that can specify one other information processing apparatus among the one or more other information processing apparatuses as a trigger, processing of acquiring information necessary for pairing to be transmitted from the one other information processing apparatus as pairing information; and perform pairing with the one other information processing apparatus by using the pairing information acquired.

Furthermore, in order to achieve the above object, an information processing apparatus according to another aspect of the present invention is an information processing apparatus performing information communication with other information processing apparatuses for performing a predetermined function, and the information processing apparatus includes a pairing unit configured to execute, using acquisition of information as specifying information that can specify the information processing apparatus by the other information processing apparatus as a trigger, control for transmitting information necessary for pairing to be executed in the other information processing apparatus to the other information processing apparatus as pairing information.

### Effects of the Invention

According to the present invention, it is possible to distinguish a pairing partner from among a plurality of apparatuses.

### BRIEF DESCRIPTION OF THE DRAWINGS

FIG. 1 is a block diagram showing a configuration of an information processing apparatus including a central terminal according to an embodiment of an information processing apparatus of the present invention;
FIG. 2 is a block diagram showing a hardware configuration of the central terminal of FIG. 1;
FIG. 3 is a block diagram showing a hardware configuration of a peripheral terminal according to an embodiment of another information processing apparatus of the present invention; FIG. 4 is a functional block diagram showing an example of functional configurations of the central terminal of FIG. 2 and the peripheral terminal of FIG. 3;
FIG. 5 is a diagram showing a specific example of pairing performed between the central terminal and the peripheral terminal;
FIG. 6 is a diagram showing a specific example of pairing for solving a problem in pairing shown in FIG. 5; and
FIG. 7 is a diagram showing a specific example of pairing of prior art performed between a central terminal and a peripheral terminal.

### PREFERRED MODE FOR CARRYING OUT THE INVENTION

Embodiments of the present invention will be described below with reference to the drawings.

### (System Configuration)

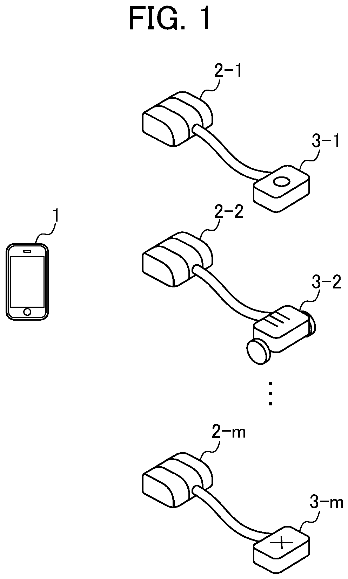

FIG. 1 is a block diagram showing a configuration of an information processing system including a central terminal 1 according to an embodiment of an information processing apparatus of the present invention. The information processing system shown in FIG. 1 includes at least a central terminal 1 to be used by a user and m-number of peripheral terminals 2-1 to 2-m (m is an any integer value of 1 or more). Furthermore, the information processing system shown in FIG. 1 includes functional modules 3-1 to 3-m as necessary. It should be noted that, in the following, in a case in which it is not necessary to distinguish each of the peripheral terminals 2-1 to 2-m individually, they are collectively referred to as "peripheral terminal 2". In addition, in a case in which it is not necessary to distinguish the functional modules 3-1 to 3-m individually, they are collectively referred to as "functional module 3".

The peripheral terminal 2 is a hardware device to be used in connection with the functional module 3, and performs pairing with the central terminal 1 in short-range wireless communication. In short, pairing refers to causing the central terminal 1 to recognize the type, connection state, and the like of the peripheral terminal 2 and the functional module 3 connected thereto by using the short-range wireless communication. More specifically, for example, pairing in BLE refers to processing of registering, in the central terminal 1, an advertising packet transmitted from a peripheral terminal 2-K that is to be wirelessly connected to the central terminal 1, as described above. It should be noted that, in the following description, pairing in BLE shall be performed. That is, the central terminal 1 performs pairing with a predetermined peripheral terminal 2-K (K is any integer value from 1 to m) to thereby recognize the peripheral terminal 2-K and a predetermined functional module 3-K connected to the peripheral terminal 2-K. The functional module 3-K is, for example, a hardware device composed of various sensors such as a temperature sensor, an operating device such as a buzzer, and a driving device such as a motor or a fan.

### (Hardware Configuration)

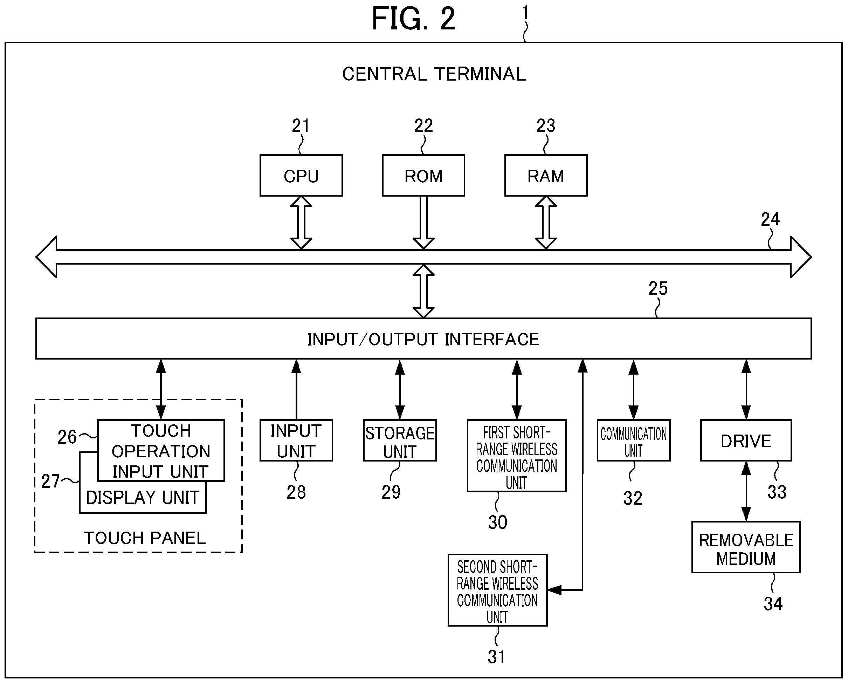

FIG. 2 is a block diagram showing a hardware configuration of the central terminal 1 of FIG. 1.

The central terminal 1 includes a predetermined hardware device or the like. The central terminal 1 includes a CPU (Central Processing Unit) 21, ROM (Read Only Memory) 22, RAM (Random Access Memory) 23, a bus 24, an input/output interface 25, a touch operation input unit 26, a display unit 27, an input unit 28, a storage unit 29, a first short-range wireless communication unit 30, a second short-range wireless communication unit 31, a communication unit 32, a drive 33, and a removable medium 34.

The CPU 21 executes various kinds of processing according to a program recorded in the ROM 22 or a program loaded into the RAM 23 from the storage unit 29. In the RAM 23, information required for the CPU 21 to perform various kinds of processing is also stored as appropriate.

The CPU 21, the ROM 22, and the RAM 23 are interconnected via the bus 24. An input/output interface 25 is also connected to the bus 24. The touch operation input unit 26, the display unit 27, the input unit 28, the storage unit 29, the first short-range wireless communication unit 30, the second short-range wireless communication unit 31, the communication unit 32, and the drive 33 are connected to the input/output interface 25.

The touch operation input unit 26 is composed of, for example, a position input sensor of the capacitive type or the resistive film type (pressure sensitive type) stacked on the display unit 27, and detects the coordinates of the position where the touch operation is performed. The display unit 27 is composed of a display such as a liquid crystal, and displays various kinds of images such as an image relating to program production. Thus, in the present embodiment, the touch panel is composed of the touch operation input unit 26 and the display unit 27.

The input unit 28 is composed of various kinds of hardware and the like, and inputs various kinds of information according to an instruction and operation of the user. The storage unit 29 is composed of a hard disk, DRAM (Dynamic Random Access Memory) or the like, and stores various kinds of information. The first short-range wireless communication unit 30 executes control for performing short-range wireless communication in a method according to, for example, NFC (Near-Field Communication) (registered trademark) standard. The second short-range wireless communication unit 31 executes control for performing short-range wireless communication in a method according to, for example, the BLE (Bluetooth (registered trademark) Low Energy) standard. In the present embodiment, as described above, the central terminal 1 and the peripheral terminal 2 perform pairing by short-range wireless communication in a method according to the BLE standard. The communication unit 32 controls communication with other devices via the Internet or the like, independently of the first short-range wireless communication unit 30 and the second short-range wireless communication unit 31.

The drive 33 is provided as necessary. The removable medium 34 composed of a magnetic disk, an optical disk, a magneto-optical disk, a semiconductor memory, or the like is appropriately mounted on the drive 33. Programs read from the removable medium 34 by the drive 33 is installed in the storage unit 29 as necessary. Furthermore, the removable medium 34 can also store various kinds of information stored in the storage unit 29 in the same manner as the storage unit 29.

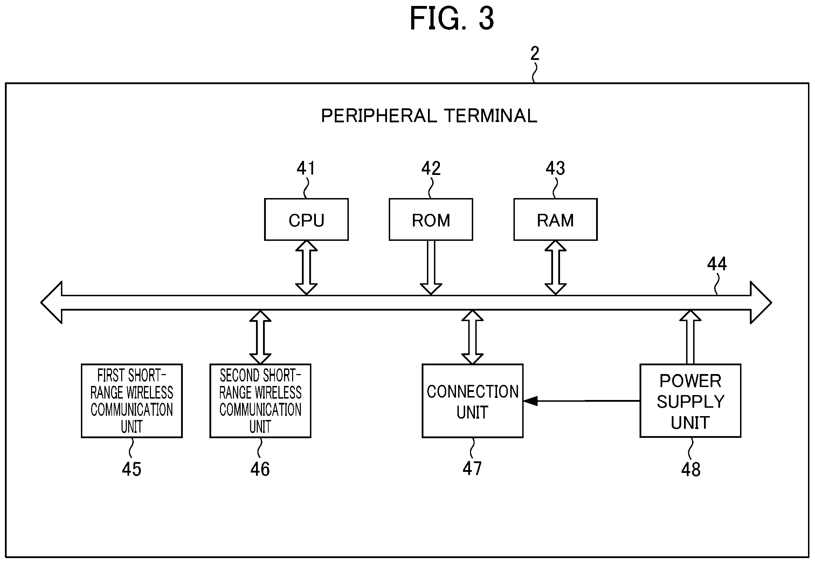

FIG. 3 is a block diagram showing a hardware configuration of a peripheral terminal 2 according to an embodiment of another information processing apparatus of the present invention.

The peripheral terminal 2 is composed of a predetermined hardware device or the like. The peripheral terminal 2 includes a CPU 41, ROM 42, RAM 43, a bus 44, a first short-range wireless communication unit 45, a second short-range wireless communication unit 46, a connection unit 47, and a power supply unit 48.

In the configuration of the peripheral terminal 2, the CPU 41, the ROM 42, the RAM 43, the bus 44, the first short-range wireless communication unit 45, and the second short-range wireless communication unit 46 are basically the same as the configurations of the central terminal 1, and thus will not be described here.

The connection unit 47 provides connection with other hardware devices (e.g., the functional module 3 of FIG. 1). The connection method by the connection unit 47 is not particularly limited, and connection may be performed by a method in accordance with, for example, the LAN (Local Area Network) standard. The connection unit 47 receives power from the power supply unit 48, which will be described later, and transmits power to other hardware devices. The power supply unit 48 is a battery such as a cell. The power supply unit 48 supplies power to the peripheral terminal 2, and supplies power to the functional module 3 as appropriate via the connection unit 47.

Although not shown, the functional module 3 in the information processing system of FIG. 1 also has the hardware configuration shown in FIG. 3.

The wireless connection processing can be executed by the cooperation of various kinds of hardware and various kinds of software of the central terminal 1 and the peripheral terminal 2. Here, the wireless connection processing refers to processing of wirelessly connecting the peripheral terminal 2 to the central terminal 1.

### (Functional Configuration)

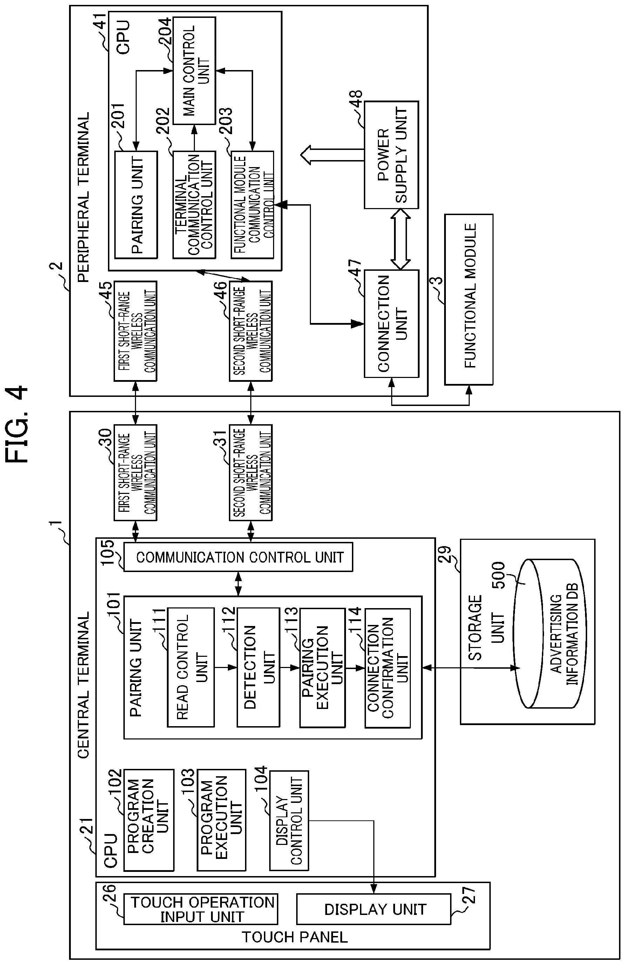

The central terminal 1 and the peripheral terminal 2 have functional configurations as shown in FIG. 4 in order to realize the above-described wireless connection processing.

FIG. 4 is a functional block diagram showing an example of the functional configuration of the central terminal 1 of FIG. 2 and the peripheral terminal 2 of FIG. 3.

### (Central Terminal)

As shown in FIG. 4, when the wireless connection processing is executed in the CPU 21 of the central terminal 1, the pairing unit 101, the display control unit 104, and the communication control unit 105 will function. Furthermore, an advertising DB 500 is provided in one area of the storage unit 29 of the central terminal 1.

The pairing unit 101 performs pairing between the central terminal 1 and the peripheral terminal 2 via the second short-range wireless communication unit 31 using wireless communication with the central terminal 1 by the first short-range wireless communication unit 30 as a trigger. The pairing unit 101 includes a reading control unit 111, a detection unit 112, a pairing execution unit 113, and a connection confirmation unit 114.

The reading control unit 111 executes control for reading information for uniquely specifying one peripheral terminal 2 among the peripheral terminals 2-1 to 2-m (hereinafter referred to as "individual identification information"). More specifically, the reading control unit 111 executes control for reading the individual identification information of one peripheral terminal 2 by short-range wireless communication using NFC (registered trademark) via the first short-range wireless communication unit 30.

The detection unit 112 detects that the individual identification information of the peripheral terminal 2 has been read by the reading control unit 111.

The pairing execution unit 113 acquires the advertising packet transmitted from the peripheral terminal 2 by the short-range wireless communication by BLE using the detection by the detection unit 112 as a trigger through the second short-range wireless communication unit 31, and executes pairing with the one peripheral terminal 2 from which the individual identification information is read.

The connection confirmation unit 114 confirms the type and connection status of the peripheral terminal 2 paired with the central terminal 1 and the functional module 3 connected thereto.

A program creation unit 102 accepts a touch operation by a user and actually creates a program. Here, the program causes the functional module 3 connected to the paired peripheral terminal 2 to perform a predetermined function. The program execution unit 103 extracts a program desired to be executed by the user from the programs created by the program creation unit 102, and executes the extracted program. That is, the program execution unit 103 transmits the execution result (such as a command) of the created program to the peripheral terminal 2 and the functional module 3, to cause the functional module 3 to perform a function.

The display control unit 104 executes control for displaying various kinds of information and the like on the display unit 27. For example, the display control unit 104 may also execute control to display the type of the functional module 3 and the connection status confirmed by the connection confirmation unit 114 on the display unit 27.

The communication control unit 105 performs control and the like for transmitting various kinds of information to the peripheral terminal 2 via the first short-range wireless communication unit 30 or the second short-range wireless communication unit 31.

### (Peripheral Terminal)

As shown in FIG. 4, when the wireless connection processing is executed in the CPU 41 of the peripheral terminal 2, the pairing unit 201, the terminal communication control unit 202, the functional module communication control unit 203, and the main control unit 204 will function. The pairing unit 201 performs pairing with the central terminal 1 in BLE by the second short-range wireless communication unit 46 with the wireless communication with the central terminal 1 performed by the first short-range wireless communication unit 45 as a trigger.

The terminal communication control unit 202 executes control and the like for acquiring various kinds of information transmitted from the central terminal 1 via the second short-range wireless communication unit 46.

When the peripheral terminal 2 and the functional module 3 are connected via the connection unit 47, the functional module communication control unit 203 executes control of communication with the functional module 3.

The main control unit 204 executes main control of various kinds of processing executed by the peripheral terminal 2.

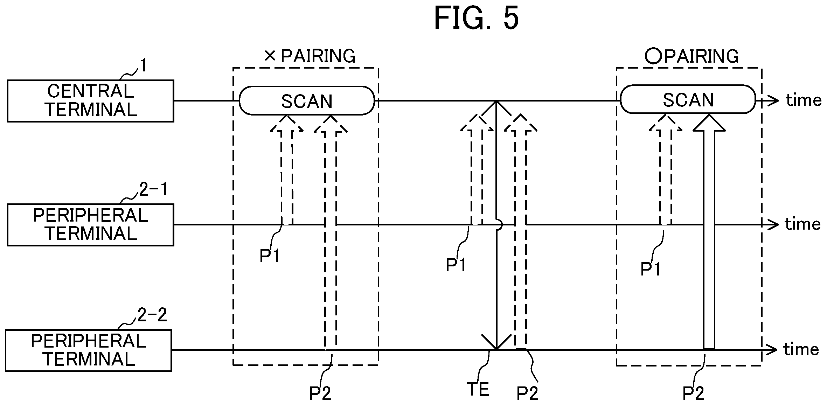

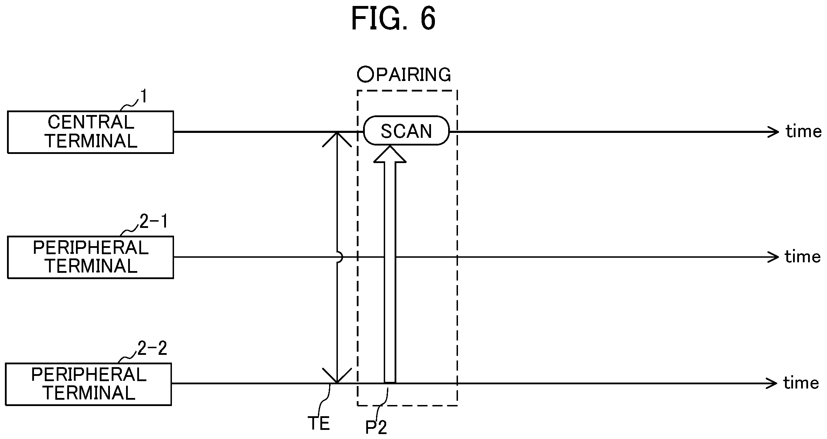

Next, the pairing performed between the central terminal 1 and the peripheral terminal 2 having the functional configuration shown in FIG. 4 will be described in detail. FIG. 5 is a diagram showing a specific example of pairing performed between the central terminal 1 and the peripheral terminal 2. It should be noted that, in the present embodiment, as will be described later, the pairing in the example of FIG. 6 is executed instead of the pairing in the example of FIG. 5. In FIG. 5, white arrows indicate advertising packets. As described above, in BLE, an advertising packet outputted from the peripheral terminal 2 is received by the central terminal 1 and registered therein, a result of which the pairing is performed.

In the example of FIG. 5, the central terminal 1 performs scanning at a predetermined interval for acquiring an advertising packet. On the other hand, each of the peripheral terminals 2-1 and 2-2 transmits its own advertising packet. In a case in which the timing of the scanning by the central terminal 1 overlaps the timing of the transmission of the advertising packet by the peripheral terminal 2, the central terminal 1 can perform pairing with the peripheral terminal 2. However, as shown in FIG. 5, when the advertising packet is transmitted from each of the two peripheral terminals 2-1 and 2-2 during the scanning period in the central terminal 1, the central terminal 1 acquires the advertising packet from each of the two peripheral terminals 2-1 and 2-2. At this point, although the central terminal 1 can detect that the two peripheral terminals 2-1 and 2-2 exist in the vicinity, it is not possible to distinguish which one is the peripheral terminal 2-1 and which one is the peripheral terminal 2-2.

Therefore, the user may perform an operation of bringing one of the two peripheral terminals 2-1 and 2-2 that desires pairing (for example, the peripheral terminal 2-2) into contact with or close to the central terminal 1. In this case, the first short-range wireless communication unit 45 of the peripheral terminal 2-2 and the first short-range wireless communication unit 30 of the central terminal 1 perform short-range wireless communication by NFC (registered trademark). An event in which such a central terminal 1 and the peripheral terminal 2 (the peripheral terminal 2-2 in this example) are brought into contact with or close to each other to perform short-range wireless communication by NFC (registered trademark) is, hereinafter, referred to as a "touch event". If the touch event is performed by the peripheral terminal 2-2, the central terminal 1 can determine that the peripheral terminal 2-2 is to be paired.

However, in order to perform pairing between the central terminal 1 and the peripheral terminal 2-2, it is necessary for the advertising packet of the peripheral terminal 2-2 to be transmitted after the touch event and during the scanning of the central terminal 1. Therefore, if the scan timing of the central terminal 1 and the transmission timing of the advertising packet of the peripheral terminal 2-2 do not match properly, it takes time from the time the touch event is performed until the pairing between the central terminal 1 and the peripheral terminal 2-2 is performed. That is, a first problem arises in that the pairing time becomes longer.

Therefore, in order to solve the first problem, the scanning time by the central terminal 1 may be increased or the scanning interval may be reduced to thereby easily acquire the advertising packet to be transmitted from the peripheral terminal 2-2. However, in this case, since the time for scanning by the central terminal 1 becomes longer in total, a second problem arises in that the power consumption increases. In order to solve the second problem, power consumption can be reduced by reducing the scanning time in total by the central terminal 1. However, the first problem arises conversely.

Furthermore, in order to solve the first problem, the interval for the transmission of the advertising packet by the peripheral terminal 2-2 may be reduced so that the central terminal 1 easily acquires the transmitted advertising packet. However, since the total number of times of transmission by the peripheral terminal 2-2 increases, the second problem arises in that power consumption increases. In order to solve the second problem, if the time required for pairing is increased, the number of transmissions by the peripheral terminal 2-2 may be reduced in total. However, the first problem arises conversely.

Therefore, in order to solve the first problem and the second problem at the same time, the pairing of the example in FIG. 6 is performed in the present embodiment. FIG. 6 is a diagram showing a specific example of pairing for solving the problem of pairing shown in FIG. 5, i.e. the problem of causing one of the first problem and the second problem.

As shown in FIG. 6, with the touch event by the central terminal 1 and the peripheral terminal 2-2 as a trigger, the central terminal 1 starts scanning, and the peripheral terminal 2-2 starts transmission of advertising. More specifically, the reading control unit 111 of the central terminal 1 executes control for reading the individual identification information of the peripheral terminal 2-2 which is the partner of the touch event. As a result, the central terminal 1 immediately reads the individual identification information of the peripheral terminal 2-2. At this time, since the detection unit 112 of the central terminal 1 detects that the individual identification information of the peripheral terminal 2-2 has been read, the pairing execution unit 113 starts scanning with this detection as a trigger. At substantially the same time, the pairing unit 201 of the peripheral terminal 2-2 similarly detects that the individual identification information has been read by the touch event by the central terminal 1, and transmits an advertising packet with this detection as a trigger. Thus, the pairing unit 201 of the peripheral terminal 2-2 can immediately receive the advertising packet of the peripheral terminal 2-2 at substantially the same as the touch event, and can perform pairing.

In this manner, the central terminal 1 can immediately perform pairing with one peripheral terminal 2 (the peripheral terminal 2-2 in the example of FIG. 6) of the two peripheral terminals 2 (the peripheral terminals 2-1 and 2-2 in the example of FIG. 6) of the same product type, substantially at the same time as the touch event. In other words, the first problem is solved. Furthermore, since the central terminal 1 starts scanning with a touch event as a trigger without performing scanning at regular intervals, the power required for scanning can be saved. Similarly, since the peripheral terminal 2 can start the transmission of the advertising packet using the touch event as a trigger without performing packet transmission at regular intervals, it is possible to suppress the transmission of unnecessary advertising packets that are not scanned, thereby making it possible to save power. In other words, the second problem is solved.

While one embodiment of the present invention has been described above, the present invention is not limited to the above-described embodiments, and modifications, improvements, and the like within a scope which can achieve the object of the present invention are included in the present invention.

For example, in the above-described embodiments, the central terminal 1 performs only scanning and the peripheral terminal 2 performs only packet transmission. However, the present invention is not limited to this configuration. Both the central terminal 1 and the peripheral terminal 2 may be configured to perform both scanning and packet transmission. In this case, pairing can be performed more efficiently.

In the examples of FIGS. 5 and 6 described above, the event in which the central terminal 1 recognizes the peripheral terminal 2 as the pairing target, and which is used as a trigger for starting pairing is the touch event using short-range wireless communication by NFC (using a combination of an NFC reader and an NFC tag). However, the present invention is not particularly limited thereto. Other than the above, for examples, it is possible to adopt the combination of a camera and a QR code (registered trademark), the combination of a Hall sensor and a magnet, or the combination of an acceleration sensor and a vibration motor. These combinations are combinations capable of receiving triggers in one direction from the former to the latter or from the latter to the former. However, the present invention is not particularly limited thereto. That is, for example, a combination of an NFC reader and an NFC host card emulation device; a combination of a speaker and a microphone; or a microphone and a speaker may be employed. These combinations result in combinations that can receive triggers bidirectionally from the former to the latter and from the latter to the former.

Furthermore, for example, in the above-described embodiments, the pairing between the central terminal 1 and the peripheral terminal 2 is performed by short-range wireless communication according to the BLE standard. However, the present invention is not particularly limited thereto. The pairing is not limited to short-range wireless communication, and may be performed by any means.

Furthermore, for example, in the above-described embodiments, both the number of peripheral terminals 2 and the number of functional modules 3 have been described using the symbol m. However, the present invention is not particularly limited thereto. That is, the number of peripheral terminals 2 and the number of functional modules 3 may be the same or differ. That is, s-number of (s is an arbitrary integer value of 1 or more) functional modules 3 may be connected to one peripheral terminal 2.

For example, the series of processing described above can be executed by hardware or software. In other words, the functional configuration of FIG. 4 is merely an example, and thus is not particularly limited. That is, it suffices if the information processing system is provided with a function capable of executing the above-described series of processing as a whole, and what kind of functional block is used for realizing this function is not particularly limited to the example of FIG. 4. Furthermore, the location of the functional block is not particularly limited to FIG. 4, and thus may be arbitrary. Furthermore, one functional block may be composed of a single hardware unit, a single software unit, or a combination thereof.

Furthermore, for example, when a series of processing is executed by software, a program comprising the software is installed on a computer or the like from a network or a recording medium. The computer may be a computer embedded in dedicated hardware. Furthermore, the computer may be a computer capable of performing various kinds of functions by installing various programs and, for example, may be a general-purpose smartphone or a personal computer of the server.

Furthermore, for example, a recording medium including such a program is not only composed of a removable medium (not shown) which is distributed separately from the device main body in order to provide the program to the user, but also composed of a recording medium or the like which is provided to the user in a state in which the recording medium is incorporated in the apparatus main body in advance.

It should be noted that, in the present specification, the step of writing a program recorded on a recording medium includes not only processing performed in a time series following this order, but also processing performed in parallel or individually, even though the processing is not necessarily performed in a time series. In addition, in the present specification, the term "system" is intended to mean an overall device composed of a plurality of devices, a plurality of means, and the like.

In other words, the information processing apparatus to which the present invention is applied can assume various embodiments having the following configurations. In other words, an information processing apparatus (for example, the central terminal 1 of FIG. 3) to which the present invention is applied is an information processing apparatus performing information communication for one or more other information processing apparatuses (for example, the peripheral terminal 2 of FIG. 3), each performing a predetermined function, and the information processing apparatus includes a pairing unit (for example, the pairing unit 101 of FIG. 4) configured to start (for example, refer to FIG. 6), using acquisition of information as specifying information (for example, the abovementioned individual identification information) that can specify one other information processing apparatus (for example, the peripheral terminal 2-2 of FIG. 6) from among the one or more other information processing apparatuses, as a trigger, processing of acquiring information necessary for pairing to be transmitted from the one other information processing apparatus as pairing information (for example, the abovementioned advertising packet); and perform pairing with the one other information processing apparatus by using the pairing information acquired.

Furthermore, an information processing apparatus to which the present invention is applied (for example, the peripheral terminal 2 of FIG. 3; more specifically, the peripheral terminal 2-2 of FIG. 6, for example) is an information processing apparatus performing information communication with other information processing apparatus (for example, the central terminal 1 of FIG. 3) for performing a predetermined function, and the information processing apparatus includes a pairing unit (for example, the pairing unit 201 of FIG. 4) configured to execute, using acquisition of information as specifying information (for example, the abovementioned individual identification information) that can specify the information processing apparatus by the other information processing apparatus, as a trigger, control for transmitting information necessary for pairing to be executed in the other information processing apparatus to the other information processing apparatus as pairing information (for example, the abovementioned advertising packet).

This makes it possible to distinguish a pairing partner from among a plurality of apparatuses. Furthermore, as described above with reference to FIG. 6, pairing can be performed in a short time and with low power consumption from the acquisition of the specifying information, i.e. the touch event in the example of FIG. 6.

### EXPLANATION OF REFERENCE NUMERALS

- 1: central terminal
- 2, 2-1, 2-2, 2-m: peripheral terminal,
- 3, 3-1, 3-2, 3-m: functional module,
- 21: CPU,
- 22: ROM,
- 23: RAM,
- 24: bus,
- 25: I/O interface,
- 26: touch operation input unit,
- 27: display unit,
- 28: input unit,
- 29: storage,
- 30: first short-range wireless communication unit,
- 31: second short-range wireless communication unit,
- 32: communication unit,
- 33: drive,
- 34: removable medium,
- 41: CPU,
- 42: ROM,
- 43: RAM,
- 44: bus,
- 45: first short-range wireless communication unit,
- 46: second short-range wireless communication unit,
- 47: connection unit,
- 48: power supply unit,
- 101: pairing unit,
- 102: program creation unit,
- 103: program execution unit,
- 104: display control unit,
- 105: communication control unit,
- 111: read control unit,
- 112: detection unit,
- 113: pairing execution unit,
- 114: connection confirmation unit,
- 201: pairing unit,
- 202: terminal communication control unit,
- 203: functional module communication control unit,
- 204: main control unit,
- 500: advertising DB

## Claims

1. An information processing apparatus performing information communication for one or more other information processing apparatuses, each performing a predetermined function,
comprising a pairing unit configured to: start, using acquisition of information as specifying information that can specify one other information processing apparatus from among the one or more other information processing apparatuses as a trigger, processing of acquiring information necessary for pairing to be transmitted from the one other information processing apparatus as pairing information; and perform pairing with the one other information processing apparatus by using the pairing information acquired.

2. An information processing apparatus performing information communication with other information processing apparatus for performing a predetermined function,
comprising a pairing unit configured to execute, using acquisition of information as specifying information that can specify the information processing apparatus by the other information processing apparatus as a trigger, control for transmitting information necessary for pairing to be executed in the other information processing apparatus to the other information processing apparatus as pairing information.
